# EUROPÄISCHE PATENTSCHRIFT

(11) **EP 1 606 476 B1**
(45) Veröffentlichungstag und Bekanntmachung des Hinweises auf die Patenterteilung: **04.10.2006**
(21) Anmeldenummer: 04715270.7
(22) Anmeldetag: 27.02.2004
(51) Int. Cl.: E04H 4/00

(54) **VORRICHTUNG UND VERFAHREN ZUM ERZEUGUNG VON STEHENDEN WELLEN IN FLIESSGEW SSERN**
DEVICE AND METHOD FOR GENERATING STATIONARY WAVES IN FLOWING WATER
PROCEDE ET DISPOSITIF POUR GENERER DES ONDES STATIONNAIRES DANS DES EAUX COURANTES

(30) Priorität: 27.02.2003 DE 10308812
(43) Veröffentlichungstag der Anmeldung: 21.12.2005
(73) Patentinhaber: Aufleger, Markus, 82547 Beuerberg (DE); Gruber, Markus, 81243 München (DE)
(72) Erfinder: AUFLEGER, Markus, 82547 Beuerberg (DE); GRUBER, Markus, 81243 München (DE); REIF, Bernd, 91217 Hersbruck (DE)
(74) Vertreter: Obermüller, Bernhard
(86) Internationale Anmeldenummer: PCT/EP2004/001979
(87) Internationale Veröffentlichungsnummer: WO 2004/076779

(56) Entgegenhaltungen:
- EP-A- 0 293 831
- WO-A-92/04087
- WO-A-02/083256
- DE-A- 2 641 122
- DE-U- 20 019 358
- US-A- 3 557 559
- US-A- 4 662 783

## Beschreibung

Die Erfindung betrifft eine Vorrichtung und ein Verfahren zur Erzeugung von stehenden Wellen in Fließgewässern.

In Fließgewässern ergeben sich vereinzelt stehende Wellen als unbeabsichtigtes Resultat wasserbaulicher Anlagen oder natürlicher Besonderheiten. Diese singulären Stellen unterliegen einer starken Nutzung u.a. durch Wellenreiter und Kanusportler. Die Existenz einer geeigneten Welle ist hierbei in hohem Maße vom Abfluss d.h. von der Wasserführung des Gewässers abhängig. Für die beschriebene Nutzergruppe attraktive Wellen ergeben sich an diesen singulären Stellen insbesondere im Hochwasserfall, wodurch Sicherheits- und Haftungsprobleme verursacht werden. In Fließgewässern sind auch an diesen singulären Stellen keine brechenden Wellen bekannt, welche - als Sonderform stehender Wellen - aufgrund ihrer besonderen Geometrie und der hohen Dynamik eine besondere Attraktivität für Wellenreiter besitzen.

Es sind Bestrebungen bekannt, stehende Wellen bei üblicher Wasserführung in Fließgewässern zu erzeugen. Die grundsätzliche Anordnung eines wellenerzeugenden unveränderlichen Einbaus (Wellenerzeugers) in fließenden Gewässern und Staustufen ist Gegenstand des Dokuments WO 9204087, der deutschen Gebrauchsmusterschrift DE 200 19 358 U1 sowie der deutschen Offenlegungsschrift DE 101 02 805 A. Hierbei wird im Unterwasser eines Querbauwerkes (bezeichnet als Staustufe) ein in seiner Achse quer zur Fließrichtung verlaufender Massivkörper installiert, welcher durch seine komplexe Geometrie die auftreffende Strömung in eine brechende Wellenform zwingen soll. Unveränderliche Einbauten dieser Form können zwangsläufig nur über ein begrenztes Abflussspektrum, d.h. bei einer natürlichen Wasserführung an vergleichsweise wenigen Tagen im Jahr, geeignete Wellen erzeugen. Zudem können sich insbesondere im Hochwasserfall unerwünschte Strömungsformen- und Ablösungen ergeben. Hieraus können erhebliche Sicherheits- und Haftungsfragen resultieren. Zudem ist ein negativer Einfluss auf die Flusssohle im Unterwasser durch lokal verstärkte Erosion infolge erhöhter Sohlschubspannungen zu beachten.

Prinzipiell ähnliche Einbauten in Laborsystemen bzw. Versuchsrinnen sind u.a. Gegenstand internationaler Veröffentlichungen ("A stationary oblique breaking wave for laboratory testing of surfboards" von H.G. Hornung und P. Killen, Journal of Fluid Mechanics, 1976; "Hydrodynamics of Surfboards", von Michael Paine, 1974, aktuell auf: http://www4.tpgi.com.au/users/mpaine/thesis.html).

Weitere Schutzrechte [EP 0 547 117 B2 (DE 691 14 013 T3), EP 0 629 139 B1 (DE 693 10 719 T 2)] umfassen Einrichtungen zur Erzeugung wellenähnlicher Wasserflächen geringer Fließtiefe und hoher Geschwindigkeit in künstlichen Freizeiteinrichtungen. Hierbei wird ein Planstrom erzeugt, welcher sich unmittelbar an einen wellenartig geformten Körper anlegt. Die für Fließgewässer konzipierten Anlagen nach der DE 200 19 358 U1 sowie der DE 101 02 805 A sind nicht in der Lage, Wellen für Freizeitaktivitäten in ähnlicher Qualität wie derartige Einrichtungen mit künstlich erzeugter Strömung bereitzustellen.

Der Erfindung liegt die Aufgabe zugrunde, in einem Fließgewässer für Freizeit- und Sportaktivitäten besonders geeignete Wellen, insbesondere auch brechende Wellen, zu erzeugen.

Diese Aufgabe wird erfindungsgemäß gelöst durch eine Vorrichtung mit den Merkmalen des Anspruchs 1 und ein Verfahren mit den Merkmalen des Anspruchs 27. Vorteilhafte Ausgestaltungen und Weiterbildungen sind Gegenstand der auf diese Ansprüche zurückbezogenen abhängigen Ansprüche.

Die Erfindung geht von der Überlegung aus, dass in Fließgewässern stehende und brechende Wellen insbesondere unterhalb von Querbauwerken (Wehre, Abstürze, Rampen, Schwellen) nach dem Übergang von einer strömenden (Froude-Zahl < 1) zu einer schießenden (Froude-Zahl > 1) Fließbewegung erzeugt werden können. Der vergleichsweise hohe Energieinhalt dieser schießenden Fließbewegung, welcher durch die Lage der Energielinie im Oberwasser des Querbauwerkes sowie den spezifischen Abfluss (d.h. den Abfluss pro Breitenmeter) bestimmt wird, wird in der Regel unterhalb eines Querbauwerks in einer turbulenten Fließbewegung durch Stoss- und Mischverluste abgebaut.

Üblicherweise wird an wasserbaulichen Anlagen zum Schutz der anschließenden Fließgewässerstrecke versucht, einen möglichst konzentrierten Energieabbau direkt unterhalb eines Querbauwerkes in einem ortsfesten Wechselsprung unter Ausbildung einer Deckwalze zu erreichen. Bei im wasserbaulichen Sinn ungünstigen Randbedingungen - insbesondere bei Froude-Zahlen im Bereich von 1,5 bis 4 - kann sich anstelle eines ortfesten Wechselsprunges eine stehende Welle ausbilden, in welcher ein vergleichsweise geringer Energieabbau erfolgt. Die Erfindung beinhaltet das bewusste Herstellen dieser Randbedingungen über ein möglichst breites Abflussspektrum.

Der theoretischen Untersuchung der hierbei zu berücksichtigenden Parameter sind aufgrund der Komplexität der Strömungsvorgänge in einem Fließgewässer Grenzen gesetzt. Die Formgebung einer geeigneten Vorrichtung zur Wellenerzeugung kann im Detail im hydraulischen Modellversuch unter Beachtung der lokalen Besonderheiten (Höhe des Querbauwerkes, Abfluss, Unterwasser-Fließtiefe, Breite des Fliessgewässers u.a.) optimiert werden.

Nach bevorzugten Ausgestaltungen weist die Anlage bzw. das Verfahren zur Wellenerzeugung folgende Merkmale auf, mit welchen eine bedarfsorientierte Erzeugung stehender Wellen in Fließgewässern über ein breites Abflussspektrum ermöglicht ist:

Eine im Anschluss an ein senkrecht zur Achse des Fließgewässers verlaufendes Querbauwerk angeordnete Leitrampe ist im Raum verzogen.

Die Schnittlinie der Leitrampe mit der anschließenden Sohle verläuft im Grundriss in etwa in einem Winkel von 30° bis 50° zur Achse des Fließgewässers, geneigt in Richtung Unterwasser.

Die Neigung der Leitrampe parallel zur Gewässerachse beträgt an ihrem steileren Ende etwa h:b = 1:1 bis 1:3. Die weiteren Neigungen ergeben sich in Abhängigkeit des Verlaufes der Schnittlinie und der Rampenhöhe. Die Oberfläche der Rampe ist eben, ohne Unregelmäßigkeiten geformt.

Die Höhe und die Rauhigkeit der Rampe werden so gewählt, dass nachfolgend im Zusammenhang mit dem Verfahren noch näher erläuterten hydraulischen Vorgaben, insbesondere der minimale Abfluss von 3 m³(s*m), eingehalten werden.

Die oberwasserseitige Begrenzung der Leitrampe entspricht der Krone des Querbauwerkes und verläuft im Regelfall horizontal und senkrecht zur Gewässerachse. Zur Sicherstellung der zur Durchführung des Verfahrens erforderlichen hydraulischen Vorgaben, insbesondere der Einhaltung eine Froude-Zahl im Bereich zwischen 1,5 und 4,0 am Ende der Leitrampe, kann es erforderlich sein, die Krone auch schräg abfallend oder mit einem Durchhang auszuführen. In Einzelfällen kann auch eine im Grundriss schräge Lage zur Gewässerachse zweckmäßig sein.

Zwischen der Leitrampe und dem flexiblen Einbaukörper ist bevorzugt ein wannenförmiger Bereich angeordnet, mit einer im Grundriss schräg zur Gewässerachse verlaufenden Lage, welche durch die Grundrissgeometrie der Leitrampe und des flexiblen Einbaukörpers bestimmt wird, wodurch sich in der Regel eine Breitenzunahme entlang seiner Achse ergibt.

Der wannenförmige Bereich ist strömungsgünstig gestaltet und weist eine glatte, im Regelfall betonrauhe Oberfläche sowie bevorzugt einen horizontalen oder leicht ansteigenden Verlauf entlang seiner Achse in Strömungsrichtung auf.

Ein flexibler Einbaukörper, auch als Wellenerzeugungskörper bezeichnet, ist im Anschluss an den Fußpunkt der Leitrampe unter Einhaltung eines horizontalen Abstandes von vorzugsweise wenigen Metern angeordnet. Die Schnittlinie des flexiblen Einbaukörpers mit dem wannenartigen Bereich verläuft im Grundriss in etwa in einem Winkel von 30° bis 75°, bevorzugt 35° bis 55°, zur Achse des Fließgewässers, geneigt in Richtung Unterwasser. Die Leitrampe kann auch einen kontinuierlich stromabwärts auslaufenden Bereich aufweisen und unmittelbar in den Einbaukörper übergehen.

Die Länge des flexiblen Einbaukörpers beträgt bezogen auf den Querschnitt senkrecht zur Achse des Fließgewässers bei vorhandenen seitlichen Führungsmauern etwa 35% bis 70 % der Breite der Leitrampe, welche in diesem Falle der Gewässerbreite entspricht, kann aber insbesondere bei Leitrampen, welche sich nur über einen Teil der Gewässerbreite erstrecken, bis zu etwa 40% bis 70 % der Gewässerbreite betragen.

Der flexible Einbaukörper beginnt idealerweise im Abstand von wenigen Metern von einer gegebenenfalls auf der Seite des steileren Endes der Leitrampe vorhandenen Uferböschung oder Ufermauer, aus konstruktiven Gründen kann jedoch auch die direkte Anbindung der Einbaukörpers an die Uferstruktur erfolgen.

Die Querschnittsgestaltung des flexiblen Einbaukörpers und der Verlauf seiner Höhe in der Entwicklungsrichtung ist variabel und kann an die Erfordernisse der Nutzung angepasst werden.

Die maximale Höhe des flexiblen Einbaukörpers beträgt bevorzugt zwischen 50% und 90%, insbesondere etwa 80 %, der Höhe der Leitrampe.

Der Einbaukörper weist eine strömungsgünstige Ausführung, insbesondere des Überganges an seinem oberwasserseitigen Fußpunkt, auf.

Die Neigung der oberwasserseitigen Fläche des Einbaukörpers nimmt nach einer bevorzugten Ausführung in der Entwicklungsrichtung der Welle zu, kann jedoch in einer konstruktiv einfacheren Ausgestaltung auch konstant sein.

Der flexible Einbaukörper zur Wellenerzeugung weist bevorzugt einen flüssigkeits- oder luftgefüllten Membrankörper auf, dessen Innendruck über Zu- und Ableitungen sowie übliche Pump- und Steuereinrichtungen stufenlos geregelt werden kann.

Ein membranartiges Bauteil an dessen Oberwasserseite, welches mit dem luft- oder wassergefüllten Membrankörper bewegt werden kann, weist bevorzugt ein hohes Eigengewicht (etwa 25 kg/m2 bis 200 kg/m2) und eine hohe mechanische Belastbarkeit auf. Mögliche Materialien hierfür sind Verbundgeotextilien, Sandmatten oder Metallgitter-Verbund-Konstruktionen.

Das membranartige Bauteil ist an seinem oberwasserseitigen Fußpunkt vorzugsweise strömungsgünstig tangential an die Sohle angeschlossen. Des Weiteren bedeckt das membranartige Bauteil in gelegtem Zustand bevorzugt den typischerweise vibrationsanfälligeren Membrankörper und schützt ihn vor Schäden und Abnützungen.

Die Membran dieses flexiblen Körpers ist besonders widerstandsfähig und steif aufgebaut. Im gestellten Zustand, d.h. im zur Wellenerzeugung vorgesehenen Zustand, herrscht ein hoher Innendruck. Kräftige Haltevorrichtungen sind zum Anschluss an das Fundament vorgesehen.

Die Sicherung der schlaff liegende Membrankonstruktion im vollkommen abgesenkten bzw. entleerten Zustand gegen schädliche Vibrationen erfolgt vorzugsweise durch die Einbettung der Membran in einer Vertiefung, durch die zeitweise Sicherung mit selbsttätig wirkenden mechanischen Verschlüsse (Klettsysteme im Inneren des Membrankörpers) oder das Aufbringen eines dauerhaften und ausreichenden Unterdruckes.

Nach einer besonders bevorzugten Weiterbildung ist ein strömungsgünstig geformtes Stahlbauteil an der Oberwasserseite des Einbaukörpers vorgesehen, welches mit dem luft- oder flüssigkeitsgefüllten Membrankörper bewegt werden kann und am oberwasserseitigen Fußpunkt gelenkig gelagert ist, wobei an der gelenkigen Lagerung ein strömungsgünstiger Übergang gegeben ist. Die Stahlkonstruktion weist ein ausreichendes Gewicht zur Vermeidung schädlicher Einwirkungen infolge von Vibrationen auf den Membrankörper im gelegten Zustand auf.

Bei dem Verfahren, welches eine bedarfsorientierte Erzeugung stehender Wellen in Fließgewässern über ein breites Abflussspektrum ermöglicht, wird ein spezifischer Abfluss von mindestens 3,0 m³/(s.m) über ein Querbauwerk geführt. Dieser wird über eine räumlich gekrümmte Leitrampe in schießendem Strömungszustand in auffächernder Weise so geführt und umgelenkt, dass er am Ende der Leitrampe einen Winkel von etwa 0° bis 30° im Grundriss zur Achse des Gewässers besitzt und Froude-Zahlen in der Größe von 1,5 bis 4,0 aufweist. Dieser Schussstrahl trifft auf einen in einem Winkel von etwa 35° bis 55° im Grundriss zur Gewässerachse angeordneten flexiblen Einbaukörper und wird weiter durch den flexiblen Einbaukörper nach oben abgelenkt wird. Die Höhe des flexiblen Einbaukörpers ist so eingestellt, dass der Abfluss in schießendem Zustand über den Einbaukörper geführt werden kann, wodurch eine stehende Welle entsteht. An einem Teilbereich des Einbaukörpers tritt ein Wechselsprung auf.

Die Höhe des flexiblen Einbaukörpers wird hierbei bevorzugt so eingestellt, dass in der weiteren Entwicklung der stehenden Welle entlang des Einbaukörpers eine ortsfeste brechende Welle entsteht.

Zur Einhaltung des minimal erforderlichen spezifischen Abflusses von 3,0 m³/(s*m) erfolgt soweit erforderlich eine Abflusskonzentration durch eine geeignete Gestaltung der Krone des Querbauwerkes, durch geeignete Wehrverschlüsse oder durch Sonderformen von Wehrverschlüssen.

Zur Einhaltung der weiter anzustrebenden Randbedingungen insbesondere der Froude-Zahlen im genannten Bereich von1,5 bis 4,0 kann die Lage der Energielinie im Oberwasser des Querbauwerkes durch die Bewegung eines geeigneten Wehrverschluss, welcher auf der Krone des Querbauwerkes angebracht sein kann, angepasst werden.

Als flexible Einbaukörper können verschiedene Vorrichtungen verwendet werden: Die Bewegung des Einbaukörpers könnte durch eine Höhenverstellbarkeit eines festen Körpers erfolgen (beispielsweise ein hydraulisch absenkbares Stahlbauteil). Dies ist jedoch mit hohen Kosten und Einschränkungen in der Betriebssicherheit (Geschiebeablagerungen u.a.) verbunden.

Als Alternative kann ein aus der Konstruktion von Wehrverschlüssen bekanntes Verfahren (Schlauchwehr, DE 692 01 170 T2, DE 101 31 873 A1), welches sich auf flexible Wehrkörper beschränkt, auf die Anwendung als strömungsführender Einbaukörper übertragen werden. Schlauchwehrkonstruktionen werden bisher nicht zur Strömungsführung eingesetzt.

Der Vorteil der Erfindung besteht insbesondere darin, dass ein Verfahren und eine Vorrichtung zur bedarfsorientierten Erzeugung von stehenden Wellen in Fließgewässern über ein breites Abflussspektrum bereitgestellt ist. Von besonderem Vorteil ist die Kontrollierbarkeit und Regelbarkeit der Bildung attraktiver Wellen, insbesondere von Wellen mit einem Übergang von einer stehenden nicht brechenden zu einer brechenden Welle. Durch die Nutzbarkeit über ein breites Abflussspektrum wird die Betriebssicherheit, die Überwachbarkeit und die Hochwasserneutralität der Anlage gewährleistet. Ebenso wird die ökologische und flussbauliche Akzeptanz wesentlich erhöht.

Grundsätzlich kann die Erfindung sowohl in natürlichen Fließgewässern als auch in künstlichen Fließgewässern eingesetzt werden.

Die Erfindung wird nachfolgend anhand mehrerer Ausführungsbeispiele in Zeichnungen näher erläutert.

Hierin zeigen jeweils in vereinfachter Darstellung:
- Fig. 1: den Gesamtaufbau einer Anlage zur Wellenerzeugung,
- Fig. 2: im Querschnitt eine Wellenerzeugungsanlage mit einem Membrankörper,
- Fig. 3.1: im Querschnitt eine Wellenerzeugungsanlage mit einem in einer Vertiefung versenkbaren Membrankörper,
- Fig. 3.2: im Querschnitt eine Wellenerzeugungsanlage mit einem Membrankörper mit innenliegenden Verschlusselementen,
- Fig. 3.3: im Querschnitt eine Wellenerzeugungsanlage mit einem mit Unterdruck beaufschlagbaren Membrankörper,
- Fig. 4: im Querschnitt eine Wellenerzeugungsanlage mit einem Membrankörper und einem durch dieses betätigbaren in sich starren Strömungslenkungsbauteil, und
- Fig. 5a,b: eine Wellenerzeugungsanlagen mit einer alternativen Grundrißgestaltung.

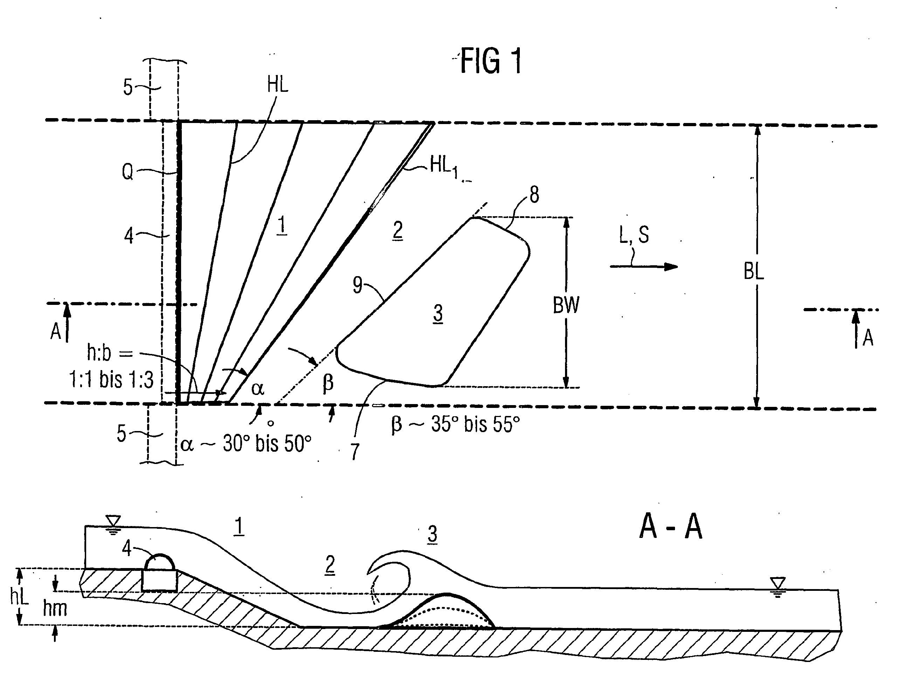

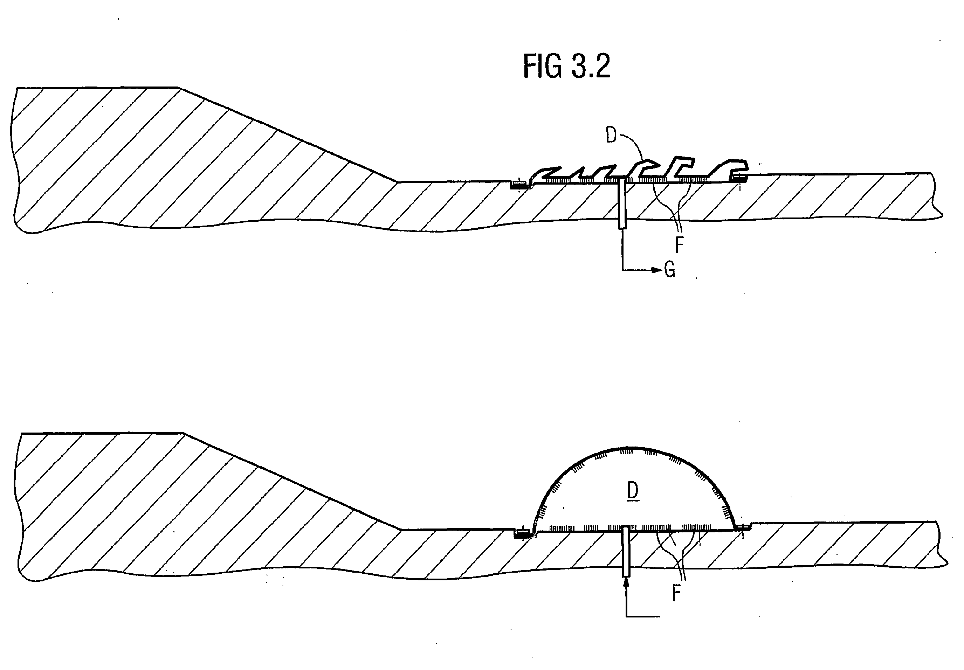

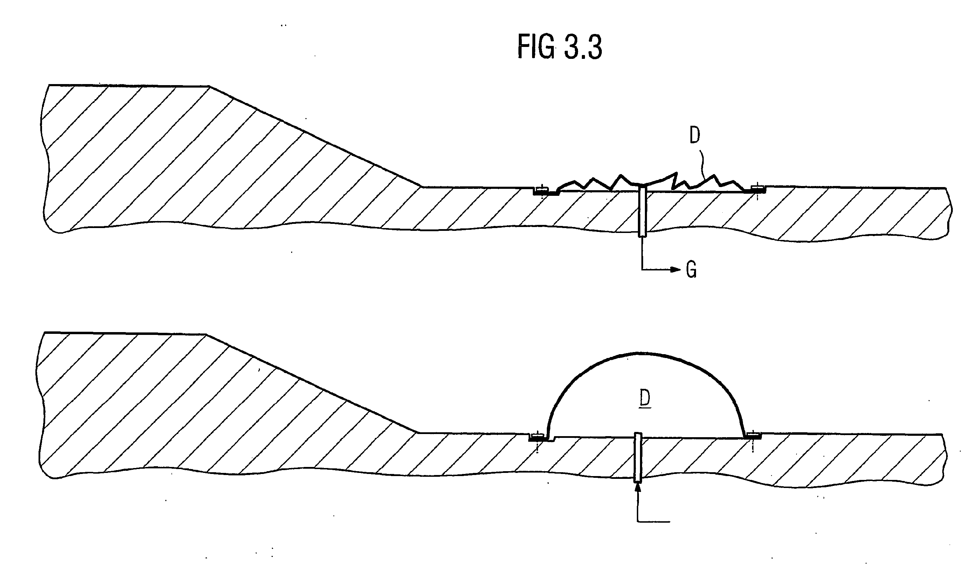

Die in den Fig. 1 bis 4 dargestellten Wellenerzeugungsanlagen haben vergleichbare Grundrissgestaltungen und weisen in allen Fällen eine Leitrampe 1 auf, welche in sich gekrümmt ist. Die Leitrampe 1 grenzt rechtwinklig an ein Oberwasser mit einer Strömungsrichtung S. Die Strömungsrichtung S entspricht der Längsachse oder Achse L eines Fließgewässers. Vereinfachend wird, sofern nichts anderes bestimmt ist, die Strömungsrichtung S, auch wenn lokal abweichende Strömungsbedingungen vorliegen, stets als parallel zur Achse L verlaufend betrachtet. Die Leitrampe 1 weist Höhenlinien HL, vergleichbar den Höhenlinien einer kartographischen Darstellung, auf, welche fächerartig auseinanderlaufen. Der Winkel zwischen den Höhenlinien und der Achse L wird in Strömungsrichtung S stetig geringer. Die Höhenlinie am stromabwärtigen Ende der Leitrampe 1 wird als Basishöhenlinie HL₁ bezeichnet.

Der Abfluss in dem Fließgewässer wird an einem Querbauwerk Q, welches als erster Strömungsbeeinflussungskörper fungiert, durch eine geeignete Formgebung der Krone des Querbauwerkes Q oder aber auch unter Verwendung wehrartiger Verschlüsse 5 (beispielsweise durch ein einseitig angeordnetes Schlauchwehr) in Abhängigkeit der Wasserführung so konzentriert, dass sich ein spezifischer Abfluss (d.h. Abfluss pro Breitenmeter) von mindestens 3,0 m³/(s.m) ergibt. Über die Leitrampe 1 wird der Schussstrahl so auf den Fußpunkt eines flexiblen Einbaukörpers 3, welcher auch als Wellenerzeugungskörper oder zweiter Strömungsbeeinflussungskörper bezeichnet wird, gelenkt, dass sich in einem wannenartigen Bereich 2 zwischen Leitrampe 1 und Einbaukörper 3 Froude-Zahlen in der Größe von etwa 1,5 bis 4 ergeben. Der Wellenerzeugungskörper 3 weist eine stromaufwärtige Flanke 7 und eine stromabwärtige Flanke 8 auf, welche vom nicht dargestellten Rand des Fließgewässers, beispielsweise eines Uferbefestigung relativ weit beabstandet ist. Die maximale Höhe des Einbaukörpers ist mit hₘ angegeben; die Höhe der Leitrampe 1 mit h_{L}. Die angeströmte Seite des Wellenerzeugungskörpers 3 ist als Anströmungsfläche 9 bezeichnet. Vorteilhafterweise kann der eindimensionale Verlauf der Anströmungsfläche 9 in einer Höhe des Wellenerzeugungskörpers 3 im wesentlichen als Gerade ausgebildet sein.

Sowohl die Fallhöhe der Anlage als auch die Rauhigkeit der Leitrampe 1 sowie deren Geometrie sind auf diese Randbedingung abzustimmen. Die Fallhöhe kann in besonderen Fällen durch eine Höhenverstellbarkeit der Überlaufkrone optimiert werden, beispielsweise ebenfalls durch ein Schlauchwehr 4. Die im Raum verzogene Leitrampe 1 schließt an der Basishöhenlinie HL₁, d.h. an der Schnittlinie zwischen der Leitrampe 1 und dem wannenartigen Bereich 2 eine Winkel α von 30° bis 50° mit der Achse L des Fließgewässers ein. Die Neigung der Leitrampe 1 in Strömungsrichtung S beträgt an ihrem steileren Ende etwa h:b = 1:1 bis 1:3.

Die Sohle des wannenartigen Bereiches 2 ist eben oder geringfügig, insbesondere in der Entwicklungsrichtung der Welle ansteigend, geneigt. Der flexible Einbaukörper 3 ist bezogen auf den Verlauf seiner oberwasserseitigen Begrenzung im Grundriss idealerweise in einem Anstellwinkel β von etwa 35° bis 55° zur Achse L des Fließgewässers angeordnet und erstreckt sich im Regelfall über etwa die Hälfte der Breite der Leitrampe 1. Wesentliche Aufgabe des flexiblen Einbaukörpers 3 ist es, bei geeigneten hydraulischen Eingangsbedingungen im wannenartigen Bereich 2 (Froude-Zahl, spezifischer Abfluss) durch eine räumliche Strömungsumlenkung das Entstehen einer ortfesten, stehenden Welle zu verursachen. Hierbei wird die Strömung jedoch nicht mittels einer wellenartigen Kontur des Einbaukörpers 3 direkt geführt, weshalb sich die Anforderungen an dessen Geometrie in Grenzen halten. Die stehende Welle baut sich an dem flexiblem Einbaukörper 3 auf, nimmt in ihrem weiteren Verlauf an Höhe zu und geht schließlich idealerweise in eine brechende Form (überhängende Lippe) über. Dieser Übergangsbereich besitzt u.a. aufgrund des hier maximalen Gefälles an der Wellenvorderseite eine besondere Attraktivität zum Wellenreiten. Weiter in Richtung Unterwasser nimmt die Wellenhöhe ab und die Fließbewegung geht in einen gewellten Abfluss mit deutlich niedrigeren Wellenhöhen über.

Wesentliche Merkmale des Einbaukörpers 3 sind eine sehr strömungsgünstige Ausführung seines oberwasserseitigen Fußpunktes, seine Lage im Grundriss und die stufenlose Verstellbarkeit seiner Höhe und Gestalt. Durch die Möglichkeit der Höhenanpassung kann sichergestellt werden, dass die grundsätzliche Fließbewegung über den Körper gerade noch im Schießen erfolgen kann. Idealerweise werden am Hochpunkt bzw. am Kamm des Einbaukörpers 3 gerade die kritischen Verhältnisse, d.h. hier der theoretische Übergang von der schießenden in eine strömende Fließbewegung, erreicht. Dies begründet das Entstehen einer wechselsprungartigen Sekundärwelle am Kamm des Einbaukörpers 3, welche in dessen weiteren Verlauf das Brechen der Welle einleitet. Zudem wird durch die Regulierbarkeit der Höhe die Ausbildung eines unkontrollierten Wechselsprunges auf dem Rücken der Einbaukörpers 3, welcher ein Volllaufen des wannenartigen Bereiches 2 zwischen Leitrampe 1 und Einbaukörper 3 verursachen würde, verhindert. Die Querschnittsgestaltung des flexiblen Einbaukörpers 3 und der Verlauf seiner Höhe in der Entwicklungsrichtung ist variabel und kann an die Erfordernisse der Nutzung so angepasst werden, dass beispielsweise in einem größeren Teilbereich der Vorrichtung, insbesondere im Uferbereich, eine stehende Welle vorhanden ist, welche aufgrund der dort vorhandenen geringeren Strömungsgeschwindigkeit und geringerem Wasserspiegelgefälle die Zufahrt für Wellenreiter zum brechenden Bereich der Welle erleichtert. Der Einbaukörper 3 kann völlig abgesenkt werden, wodurch auch die Existenz der stehenden Welle beendet wird. Ein etwaiger Einfluss der stehenden Welle auf die Flussmorphologie und die Flussökologie bleibt daher auf die Betriebszeiten der Vorrichtung beschränkt. Das vollständige Absenken des Einbaukörpers 3 begründet auch die Hochwasserneutralität der Vorrichtung. Ungünstige Strömungszustände, welche Sicherheits- und Haftungsprobleme verursachen könnten, sind außerhalb der Betriebszeiten der Anlage, bzw. bei abgesenktem Einbaukörper 3, ausgeschlossen. Die ökologische Durchgängigkeit der Vorrichtung ist bei entsprechender Gestaltung der Leitrampe 1 bzw. der angrenzenden Bereiche gewährleistet.

In jeder der in den Fig. 1 bis 5 dargestellten Ausführungsformen ist eine Membran eines Membrankörpers oder Schlauchkörpers A,H wird mittels einer Haltekonstruktion an einer massiven Unterkonstruktion befestigt. Der von Membran und Haltekonstruktion dicht umschlossene Innenraum ist mit einem Fluid D befüllbar. Über den Innendruck lässt sich die Höhe des den Membrankörper A einschließenden oder mit diesem identischen Einbaukörpers 3 stufenlos regulieren und an die hydraulischen Randbedingungen anpassen. Den erheblichen dynamischen Belastungen wird durch einen hohen Innendruck, durch eine widerstandsfähige Membrankonstruktion und entsprechend kräftige Haltevorrichtungen Rechnung getragen. Im vollkommen abgesenkten bzw. entleerten Zustand ist die schlaff liegende Membrankonstruktion gegen schädliche Vibrationen zu sichern. Dies kann durch die Einbettung der Membran in eine Vertiefung E, wodurch eine schlaffe Lagerung der Membran vermieden wird, durch die zeitweise Sicherung mit geeigneten mechanischen Verschlüssen F (u.a. Klettsysteme) oder das Aufbringen eines dauerhaften und ausreichenden Unterdruckes G erreicht werden.

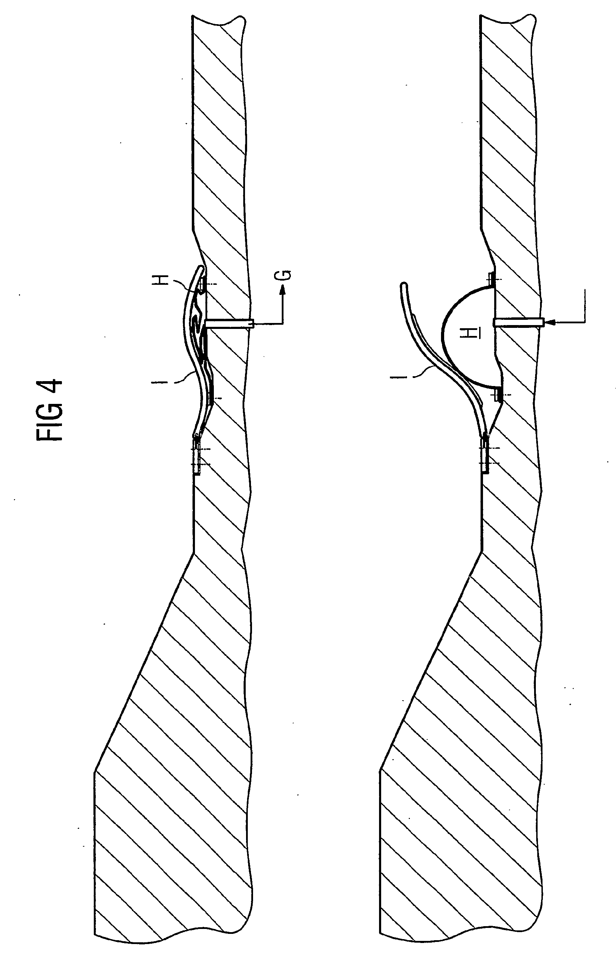

In Fig. 4 ist die Nutzung eines als Stahlkonstruktion ausgebildeten Strömungslenkungsbauteils I als Teil des insgesamt höhenverstellbaren Einbaukörpers 3 dargestellt. Durch den Innendruck des flüssigkeits- oder luftgefüllten Membrankörpers H wird der Aufstellwinkel der an dessen Oberwasserseite befestigten strömungslenkenden Stahlkonstruktion I verändert, wodurch der Einbaukörper 3 an die hydraulischen Randbedingungen angepasst werden kann. Die Stahlkonstruktion I ist mit einem Gelenk an der massiven Unterkonstruktion fixiert, auf welcher auch der Membrankörper 3 mittels Haltekonstruktionen befestigt ist. Ein ähnliches Antriebsprinzip ist aus dem Stahlwasserbau für Wehrverschlüsse bekannt (United States Patent 4.780.024). Diese Konstruktion wird bisher jedoch nicht zur Strömungsführung eingesetzt. Die Gefahr von Vibrationen im gelegten Zustand ist bei dieser Konstruktion gegenüber einer vollständigen Membranlösung (s.o.) geringer. Im gelegten Zustand können Arretierungen des Systems vorgenommen werden.

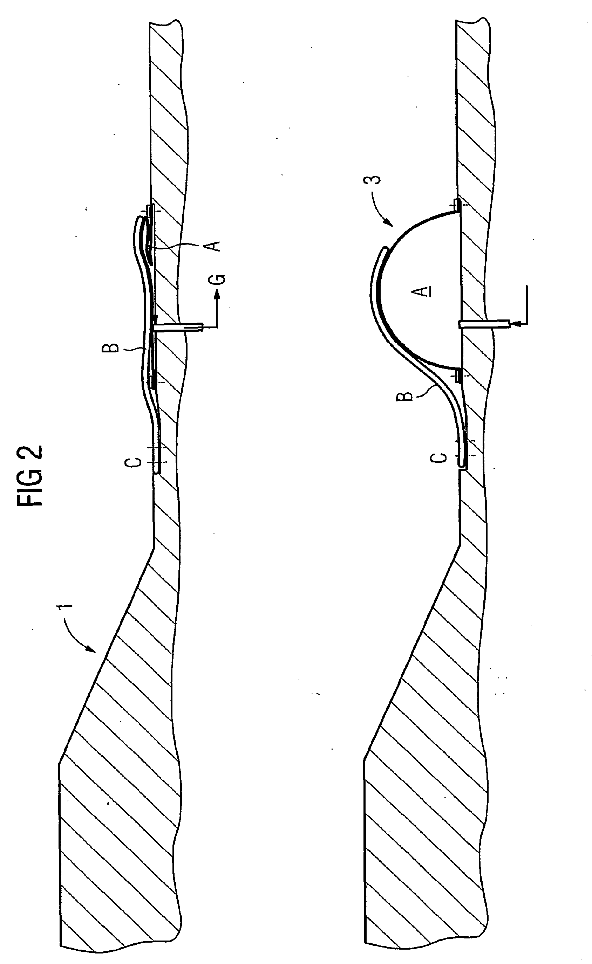

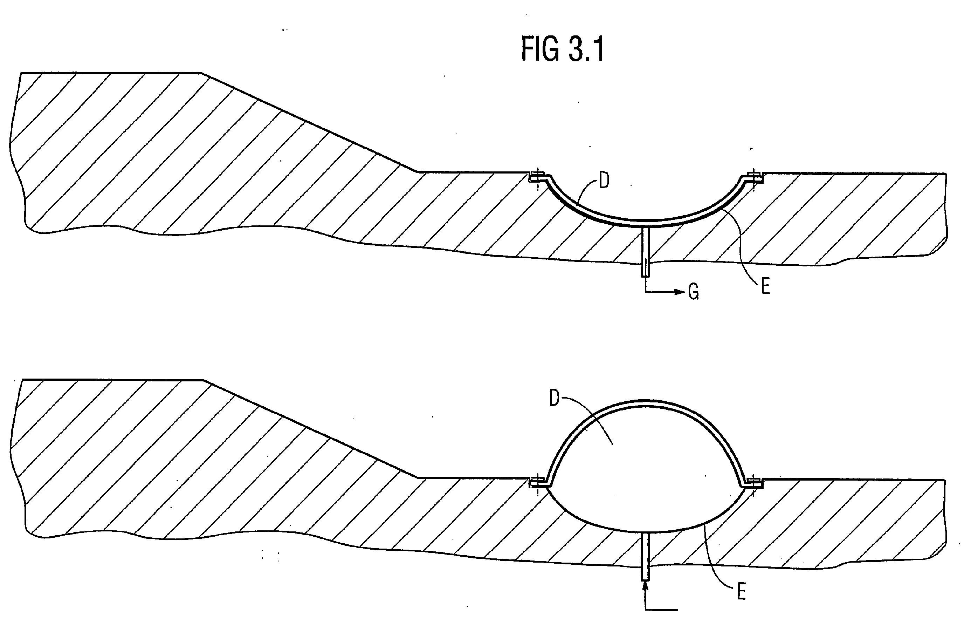

Eine alternative Ausführungsform eines Einbaukörpers oder Wellenerzeugungskörpers 3 mit einem flüssigkeits- oder luftgefüllter Membrankörper A, dessen Innendruck über Zu- und Ableitungen sowie übliche Pump- und Steuereinrichtungen geregelt werden kann, zeigt Fig. 2. Auf dem Membrankörper A ist oberwasserseitig eine weitere flexible Konstruktion angeordnet. Dieses membranartige Bauteil B weist ein vergleichsweise hohes Eigengewicht und hohe mechanische Belastbarkeit auf. Als Materialien hierfür kommen insbesondere Verbundgeotextilien, Sandmatten oder Metallgitter-Verbund-Konstruktionen in Frage. Das Membranbauteil B ist an seinem oberwasserseitigen Fußpunkt C strömungsgünstig tangential an die Sohle angeschlossen. Mittels des Membrankörpers A wird das Membranbauteil B bei Bedarf auf die gewünschte Höhe angehoben bzw. abgesenkt. Wesentlicher Vorteil dieser Vorrichtung ist die infolge des frei wählbaren, hohen Eigengewichtes des Membranbauteils B erheblich geringere Schwingungsanfälligkeit insbesondere im gelegten Zustand des EinbauKörpers. Gegenüber Stahlkonstruktionen sind sowohl die Investitionen als auch die Unterhaltskosten erheblich reduziert.

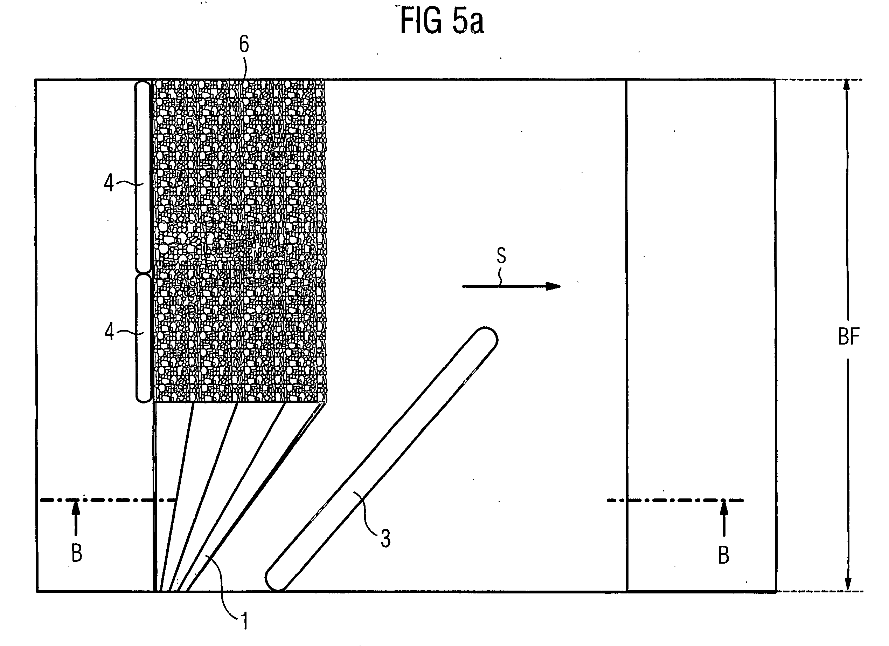

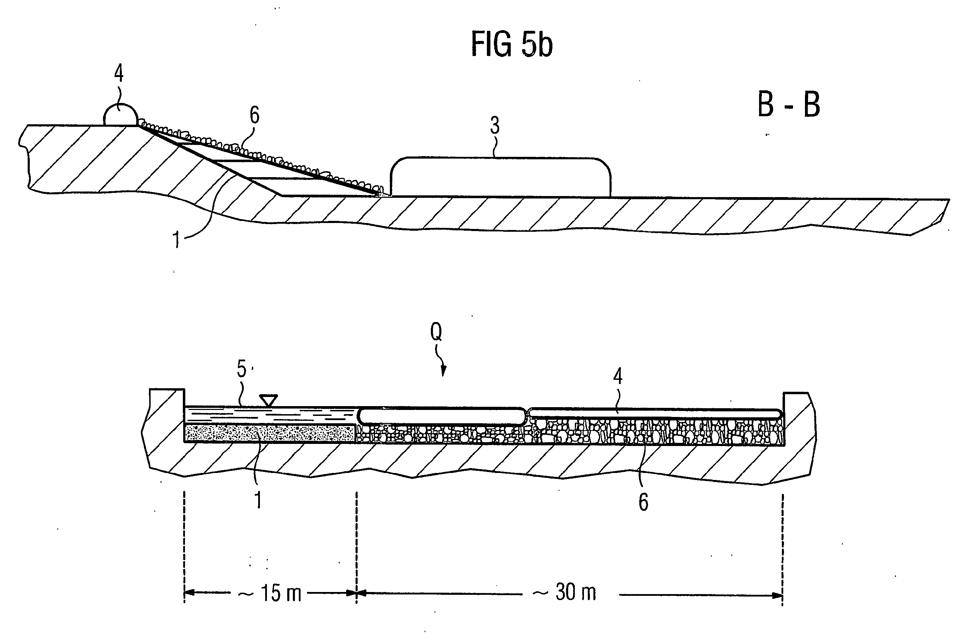

Die Fig. 5a und b zeigen eine weitere Ausführungsform einer Anlage zur Erzeugung stehender Wellen, wobei sich in diesem Fall an die Leitrampe 1 eine sogenannte Planrampe 6 konstanter Breite anschließt, welche eine größere Rauhigkeit, insbesondere in Form einer naturnahen Gestaltung, aufweist als die Leitrampe 1. Die Breite BW des Wellenerzeugungskörpers 3 ist im Ausführungsbeispiel nach Fig. 5a und b größer als die Breite BL der Leitrampe 1. Die Breite des Fließgewässers ist mit BF angegeben. Des weiteren weist der Wellenerzeugungskörper 3 nach Fig. 5a und b eine schlankere Form auf, wovon jedoch die grundsätzliche Funktionsweise nicht beeinträchtigt ist. Das Verhältnis zwischen der größten Steigung der Leitrampe 1 und der geringsten Steigung der Leitrampe 1, welche mit der Steigung der Planrampe 6 identisch ist, liegt bei etwa 2 bis 8, insbesondere 3 bis 6, woraus sich insgesamt besonders günstige Strömungsverhältnisse, insbesondere eine gezielte Strömungsleitung zum Einbaukörper 3 mit geringem Energieverlust, ergeben.

Beide Rampen 1,6 bilden, ebenso wie das Schlauchwehr 4 und der Verschluss 5 nach den oben anhand der Fig. 1 bis 4 näher erläuterten Ausführungsbeispielen, je einen Anströmungsabschnitt für das Fließgewässer, wobei in jedem Fall zumindest einer der Anströmungsabschnitte 1,4,5,6 seitlich - bezogen auf die Strömungsrichtung S - relativ zum Einbaukörper versetzt angeordnet ist. Die benachbarten Anströmungsabschnitte 4,5 bzw. 1,6 sind jeweils unterschiedlich höheneinstellbar. Dies bedeutet, dass entweder nur einer oder beide der jeweils aneinander grenzenden Abschnitte 1,4,5,6 höheneinstellbar ist. In jedem Fall ist durch unterschiedliche Höheneinstellung der Abschnitte 1,4,5,6 eine gezielte Strömung der Leitrampe 1 zuleitbar, auf welcher der Abfluss auf mindestens ca. 3,0 m³/(m*s) eingestellt wird.

### Bezugszeichenliste

- 1: Leitrampe
- 2: wannenartiger Bereich
- 3: Einbaukörper, Wellenerzeugungskörper
- 4: Schlauchwehr
- 5: Verschluss
- 6: Planrampe
- 7: Flanke
- 8: Flanke
- 9: Anströmungsfläche

- α: Winkel
- β: Anstellwinkel
- A: Membrankörper, Schlauchkörper
- B: Membranbauteil
- BF: Breite des Fließgewässers
- BW: Breite des Wellenerzeugungskörpers
- BL: Breite der Leitrampe
- C: Fußpunkt
- D: Fluid
- E: Vertiefung
- F: Verschlusselement
- G: Unterdruck
- hₘ: maximale Höhe
- h_{L}: Höhe der Leitrampe
- H: Membrankörper
- I: Strömungslenkungsbauteil
- HL: Höhenlinie
- L: Längsachse
- Q: Querbauwerk
- S: Strömungsrichtung

## Patentansprüche

1. Vorrichtung zur Erzeugung stehender Wellen in einem Fließgewässer, mit
• einem zumindest annähernd senkrecht zur Strömungsrichtung (S) angeordneten Querbauwerk (Q) als erstem Strömungsbeeinflussungskörper,
• einer an dieses stromabwärts anschließenden räumlich gekrümmten Leitrampe (1) mit Höhenlinien (HL), welche in Strömungsrichtung (S) mit dieser einen zunehmend spitzen Winkel einschließen,
• einem der Leitrampe (1) stromabwärts nachgeordneten höheneinstellbaren Wellenerzeugungskörper (3) als zweitem Strömungsbeeinflussungskörper, **dadurch gekennzeichnet, daß** der höheneinstellbaren Wellenerzeugungskörper (3) relativ zur Strömungsrichtung (S) um einen Anstellwinkel (β) schräg gestellt ist.

2. Vorrichtung nach Anspruch 1,
**dadurch gekennzeichnet,**
**dass** zumindest ein Strömungsbeeinflussungskörper (Q,3) einen formveränderlichen Schlauchkörper (A,H,4) aufweist.

3. Vorrichtung nach Anspruch 1 oder 2,
**gekennzeichnet durch**
einen zwischen der Leitrampe (1) und dem Wellenerzeugungskörper (3) angeordneten, zumindest annähernd ebenen wannenartigen Bereich (2).

4. Vorrichtung nach einem der Ansprüche 1 bis 3,
**dadurch gekennzeichnet,**
**dass** eine am stromabwärtigen Ende der Leitrampe (1) liegende Basishöhenlinie (HL₁) mit der Strömungsrichtung (S) einen Basiswinkel (α) von mindestens 15° und maximal 70° einschließt.

5. Vorrichtung nach einem der Ansprüche 1 bis 4,
**dadurch gekennzeichnet,**
**dass** die strömungszugewandte Seite des Wellenerzeugungskörpers (3) relativ zur Strömungsrichtung (S) um einen Anstellwinkel (β) von 30° bis 75° schräggestellt ist.

6. Vorrichtung nach Anspruch 4 oder 5,
**dadurch gekennzeichnet,**
**dass** der Anstellwinkel (β) größer ist als der Basiswinkel (α).

7. Vorrichtung nach einem der Ansprüche 1 bis 6,
**dadurch gekennzeichnet,**
**dass** das Querbauwerk Q mehrere unterschiedlich höheneinstellbare Anströmungsabschnitte (1,4,5,6) aufweist.

8. Vorrichtung nach Anspruch 7,
**dadurch gekennzeichnet,**
**dass** ein höhenverstellbarer Anströmungsabschnitt (1,4,5,6) in Relation zum Wellenerzeugungskörper (3) quer zur Strömungsrichtung (S) versetzt ist.

9. Vorrichtung nach einem der Ansprüche 1 bis 8,
**dadurch gekennzeichnet,**
**dass** sich an die Leitrampe (1) quer zur Strömungsrichtung (S) eine Planrampe (6) anschließt.

10. Vorrichtung nach Anspruch 9,
**dadurch gekennzeichnet,**
**dass** die Oberfläche der Planrampe (6) eine höhere Rauhigkeit als die Leitrampe (1) aufweist.

11. Vorrichtung nach einem der Ansprüche 1 bis 10,
**dadurch gekennzeichnet,**
**dass** die Breite (BW) des Wellenerzeugungskörpers (3) mindestens ein Drittel und maximal das zweifache der Breite (BL) der Leitrampe (1) beträgt.

12. Vorrichtung nach einem der Ansprüche 1 bis 11,
**dadurch gekennzeichnet,**
**dass** die Leitrampe (1) eine größte Steigung im Bereich von 1:3 bis 1:1 aufweist.

13. Vorrichtung nach einem der Ansprüche 1 bis 12,
**dadurch gekennzeichnet,**
**dass** die Leitrampe (1) eine geringste Steigung im Bereich von 1:4 bis 1:15 aufweist.

14. Vorrichtung nach einem der Ansprüche 1 bis 13,
**dadurch gekennzeichnet,**
**dass** das Verhältnis zwischen größter und kleinster Steigung der Leitrampe (1) mindestens 2 und maximal 15 beträgt.

15. Vorrichtung nach einem der Ansprüche 1 bis 14,
**dadurch gekennzeichnet,**
**dass** sich der Wellenerzeugungskörper (3) über mindestens 10% und maximal 70 % der Breite (BF) des Fließgewässers erstreckt.

16. Vorrichtung nach einem der Ansprüche 1 bis 15,
**dadurch gekennzeichnet,**
**dass** eine stromaufwärtige Flanke (7) des Wellenerzeugungskörpers (3) geringer von einer Seitenbegrenzung des Fließgewässers beabstandet ist als eine stromabwärtige Flanke (8).

17. Vorrichtung nach einem der Ansprüche 1 bis 16,
**dadurch gekennzeichnet,**
**dass** die maximale Höhe (hₘ) des Wellenerzeugungskörpers (3) höchstens 90% der Höhe (h_{L}) der Leitrampe (1) beträgt.

18. Vorrichtung nach einem der Ansprüche 1 bis 17,
**dadurch gekennzeichnet,**
**dass** eine Anströmungsfläche (9) des Wellenerzeugungskörpers (3) eine in Strömungsrichtung (S) gleichbleibende oder zunehmende Steigung aufweist.

19. Vorrichtung nach einem der Ansprüche 2 bis 18,
**dadurch gekennzeichnet,**
**dass** der Wellenerzeugungskörper (3) einen durch Innendruckbeaufschlagung formveränderlichen Schlauchkörper (A,H) aufweist.

20. Vorrichtung nach Anspruch 19,
**dadurch gekennzeichnet,**
**dass** der Wellenerzeugungskörper (3) oberwasserseitig ein durch den Schlauchkörper (A,H) bewegbares Membranbauteil (B) aufweist.

21. Vorrichtung nach Anspruch 20,
**dadurch gekennzeichnet,**
**dass** das Membranbauteil (B) ein Flächengewicht von mindestens 25 kg/m² und höchstens 200 kg/m² aufweist.

22. Vorrichtung nach Anspruch 20 oder 21,
**dadurch gekennzeichnet,**
**dass** das Membranbauteil (B) an einem oberwasserseitigen Fußpunkt tangential in Strömungsrichtung liegend befestigt ist.

23. Vorrichtung nach einem der Ansprüche 19 bis 22,
**dadurch gekennzeichnet,**
**dass** der Wellenerzeugungskörper (3) ein durch den Schlauchkörper (A,H) bewegbares, in sich zumindest im Wesentlichen starres Strömungslenkungsbauteil (I) aufweist.

24. Vorrichtung nach einem der Ansprüche 1 bis 23,
**dadurch gekennzeichnet,**
**dass** der Wellenerzeugungskörper (3) in abgesenktem Zustand zumindest teilweise in einer Vertiefung (E) versenkbar ist.

25. Vorrichtung nach einem der Ansprüche 1 bis 24,
**gekennzeichnet durch**
ein den Wellenerzeugungskörper (3) im abgesenkten Zustand haltendes Verschlusselement (F).

26. Vorrichtung nach Anspruch 25,
**dadurch gekennzeichnet,**
**dass** das Verschlusselement (F) innerhalb des Wellenerzeugungskörpers (3) angeordnet ist.

27. Verfahren zur Wellenerzeugung in einem Fließgewässer mit Hilfe einer Vorrichtung nach einer der Ansprüchen 1-26, wobei
• ein spezifischer Abfluss von mindestens 3,0 m³/(s*m) über zumindest einen Teil eines Querbauwerks (Q) geführt wird,
• dieser über eine räumlich gekrümmte Leitrampe (1) in schießendem Strömungszustand in auffächernder Weise so geführt und umgelenkt wird, dass er am Ende der Leitrampe (1) einen Winkel von etwa 0° bis 30° im Grundriss zur Gewässerachse (L) des Fließgewässers besitzt und Froude-Zahlen in der Größe von 1,5 bis 4,0 aufweist,
• dieser Schussstrahl auf einen in einem Winkel von etwa 35° bis 55° im Grundriss zur Gewässerachse (L) angeordneten flexiblen Einbaukörper (3) trifft,
• dieser Schussstrahl weiter durch den flexiblen Einbaukörper (3) nach oben abgelenkt wird,
• die Höhe des flexiblen Einbaukörper (3) so eingestellt ist, dass der Abfluss in schießendem Zustand über den Einbaukörper (3) geführt werden kann, wodurch eine stehende Welle entsteht.

28. Verfahren nach Anspruch 27,
**dadurch gekennzeichnet,**
**dass** die Höhe des flexiblen Einbaukörpers (3) so eingestellt wird, dass in der Entwicklung der stehenden Welle entlang des Einbaukörpers (3) eine ortsfeste brechende Welle entsteht.

29. Verfahren nach Anspruch 27 oder 28,
**dadurch gekennzeichnet,**
**dass** am Hochpunkt des Einbaukörpers (3) ein kritisches Strömungsverhältnis, d.h. der Übergang von der schießenden in eine strömende Fließbewegung, erreicht wird.

30. Verfahren nach einem der Ansprüche 27 bis 29,
**dadurch gekennzeichnet,**
**dass** der Abfluss mittels einer zumindest nicht vollständig horizontalen Ausbildung des Querbauwerks (Q) zur gezielten Anströmung des Einbaukörpers (3) konzentriert wird.

31. Verfahren nach einem der Ansprüche 27 bis 30,
**dadurch gekennzeichnet,**
**dass** der Abfluss und/oder eine Energielinie im Oberwasser des Querbauwerks (Q) mittels einer verstellbaren Krone des Querbauwerks (Q) eingestellt wird.

## Claims

1. A device for generating standing waves in flowing water, comprising
• a transverse structure (Q) arranged at least approximately perpendicular to the flow direction (S) as a first flow-influencing body,
• a three-dimensionally curved guide ramp (1) following the former downstream and having height lines (HL) which. in the flow direction (S), form an increasingly acute angle with the latter,
• a vertically adjustable wave-generating body (3) arranged downstream of the guide ramp (1) as a second flow-influencing body, **characterrized in that** the vertically adjustable wave-generating body (3) is set obliquely at an angle of attack (β) relative to the flow direction (S).

2. The device according to claim 1, **characterized in that** at least one flow-influencing body (Q, 3) has a variable-shape flexible tubular body (A, H, 4).

3. The device according to claim 1 or 2, **characterized by** an at least approximately flat trough-like region (2) arranged between the guide ramp (1) and the wave-generating body (3).

4. The device according to one of claims 1 to 3, **characterized in that** a base height line (HL₁) located at the downstream end of the guide ramp (1) forms a base angle (α) of at least 15° and at most 70° with the flow direction (S).

5. The device according to one of claims 1 to 4, **characterized in that** the side of the wave-generating body (3) facing the flow is set obliquely at an angle of attack (β) of 30° to 75° relative to the flow direction (S).

6. The device according to claim 4 or 5, **characterrized in that** the angle of attack (β) is larger than the base angle (α).

7. The device according to one of claims 1 to 6, **characterized in that** the transverse structure Q has a plurality of differently vertically adjustable afflux sections (1, 4, 5, 6).

8. The device according to claim 7, **characterized in that** a vertically adjustable afflux section (1, 4, 5, 6) is offset transversely with respect to the flow direction (S) in relation to the wave-generating body (3).

9. The device according to one of claims 1 to 8, **characterized in that** a planar ramp (6) adjoins the guide ramp (1) transversely with respect to the flow direction (S).

10. The device according to claim 9, **characterized in that** the surface of the planar ramp (6) has a higher roughness than the guide ramp (1).

11. The device according to one of claims 1 to 10, **characterized in that** the width (BW) of the wave-generating body (3) is at least one third and at most twice the width (BL) of the guide ramp (1).

12. The device according to one of claims 1 to 11, **characterized in that** the guide ramp (1) has a maximum slope in the range from 1:3 to 1:1.

13. The device according to one of claims 1 to 12, **characterized in that** the guide ramp (1) has a minimum slope in the range from 1:4 to 1:15.

14. The device according to one of claims 1 to 13, **characterized in that** the ratio between the maximum and minimum slope of the guide ramp (1) is at least 2 and at most 15.

15. The device according to one of claims 1 to 14, **characterized in that** the wave-generating body (3) extends over at least 10% and at most 70% of the width (BF) of the flowing water.

16. The device according to one of claims 1 to 15, **characterized in that** an upstream flank (7) of the wave-generating body (3) is spaced apart less from a lateral boundary of the flowing water than a downstream flank (8).

17. The device according to one of claims 1 to 16, **characterized in that** the maximum height (hₘ) of the wave-generating body (3) is at most 90% of the height (h_{L}) of the guide ramp (1).

18. The device according to one of claims 1 to 17, **characterized in that** an afflux surface (9) of the wave-generating body (3) has a constant or increasing slope in the flow direction (S).

19. The device according to one of claims 2 to 18, **characterized in that** the wave-generating body (3) has a flexible tubular body (A, H) of which the form can be varied by internal pressurization.

20. The device according to claim 19, **characterized in that**, on the headwater side, the wave-generating body (3) has a diaphragm component (B) which can be moved by the flexible tubular body (A, H).

21. The device according to claim 20, **characterized in that** the diaphragm component (B) has a weight per unit area of at least 25 kg/m² and at most 200 kg/m².

22. The device according to claim 20 or 21, **characterrized in that** the diaphragm component (B) is fixed to a headwater-side base lying tangentially in the flow direction.

23. The device according to one of claims 19 to 22, **characterized in that** the wave-generating body (3) has an at least intrinsically substantially rigid flow deflection component (I) that can be moved by the flexible tubular body (A, H).

24. The device according to one of claims 1 to 23, **characterized in that**, when lowered, the wave-generating body (3) can be sunk at least partly into a depression (E).

25. The device according to one of claims 1 to 24, **characterized by** a catch element (F) holding the wave-generating body (3) in the lowered state.

26. The device according to claim 26, **characterized in that** the catch element (F) is arranged within the wave-generating body (3).

27. A method for wave generation in flowing water by means of a device as claimed in one of claims 1 to 26,
• a specific discharge of at least 3.0 m³/(s*m) being guided over at least part of a transverse structure (Q),
• said discharge being guided and deflected over a three-dimensionally curved guide ramp (1) in the shooting flow state and in a manner fanning out such that, at the end of the guide ramp (1), it has an angle of about 0° to 30° in outline with respect to the axis (L) of the flowing water and Froude numbers of the order of 1.5 to 4.0,
• this shooting jet strikes a flexible installed body (3) arranged at an angle of about 35° to 55° in outline with respect to the axis (L) of the water,
• this shooting jet is further deflected upward by the flexible installed body (3),
• the height of the flexible installed body (3) being set such that the discharge in the shooting state can be guided over the installed body (3), which produces a standing wave.

28. The method according to claim 27, **characterized in that** the height of the flexible installed body (3) is set such that a stationary breaking wave is produced in the development of the standing wave along the installed body (3).

29. The method according to claim 27 or 28, **characterrized in that,** at the high point of the installed body (3), a critical flow condition, that is to say the transition from the shooting to a streaming flowing movement, is achieved.

30. The method according to one of claims 27 to 29, **characterized in that** the discharge is concentrated by means of an at least not completely horizontal formation of the transverse structure (Q) for the purpose of a specific flow onto the installed body (3).

31. The method according to one of claims 27 to 30, **characterized in that** the discharge and/or an energy line in the headwater of the transverse structure (Q) is set by means of an adjustable crest of the transverse structure (Q).

## Revendications

1. Dispositif pour produire des ondes stationnaires dans des eaux vives, comportant
- pour servir de premier corps modificateur de courant, un ouvrage transversal (Q) au moins approximativement perpendiculaire à la direction du courant (S),
- à la suite de celui-ci une rampe de guidage (1) incurvée dans l'espace et munie de lignes de niveau (HL) qui font en direction du courant (S) un angle aigu croissant dans cette direction,
- pour servir de deuxième corps modificateur de courant, un corps producteur d'ondes (3) réglable en hauteur et placé en aval de la rampe de guidage (1),
**caractérisé en ce que** le corps producteur d'ondes (3) réglable en hauteur est incliné par rapport à la direction du courant (S) d'un angle d'incidence (β).

2. Dispositif selon la revendication 1, **caractérisé en ce qu'**au moins un corps modificateur de courant (Q, 3) comporte un corps en tuyau (A, H, 4) dont la forme peut être modifiée.

3. Dispositif selon la revendication 1 ou 2, **caractérisé par** une zone (2) en auge au moins approximativement plane placée entre la rampe de guidage (1) et le corps producteur d'ondes (3).

4. Dispositif selon l'une des revendications 1 à 3, **caractérisé en ce qu'**une ligne de niveau de base (HL₁) placée à l'extrémité aval de la rampe de guidage (1) fait par rapport à la direction du courant (S) un angle de base (α) d'au moins 15° et d'au plus 70°.

5. Dispositif selon l'une des revendications 1 à 4, **caractérisé en ce que** le côté - tourné vers le courant - du corps producteur d'ondes (3) est incliné par rapport à la direction du courant (S) d'un angle d'incidence (β) de 30° à 75°.

6. Dispositif selon la revendication 4 ou 5, **caractérisé en ce que** l'angle d'incidence (β) est supérieur à l'angle de base (α).

7. Dispositif selon l'une des revendications 1 à 6, **caractérisé en ce que** l'ouvrage transversal (Q) comporte plusieurs segments d'arrivée du courant (1, 4, 5, 6) réglables à différentes hauteurs.

8. Dispositif selon la revendication 7, **caractérisé en ce qu'**un segment d'arrivée du courant (1, 4, 5, 6) est décalé transversalement à la direction du courant (S) par rapport au corps producteur d'ondes (3).

9. Dispositif selon l'une des revendications 1 à 8, **caractérisé en ce qu'**une rampe plane (6) succède à la rampe de guidage (1) transversalement à la direction du courant (S).

10. Dispositif selon la revendication 9, **caractérisé en ce que** la surface de la rampe plane (6) a une rugosité plus importante que celle de la rampe de guidage (1).

11. Dispositif selon l'une des revendications 1 à 10, **caractérisé en ce que** la largeur (BW) du corps producteur d'ondes (3) est au moins un tiers et au plus le double de la largeur (BL) de la rampe de guidage (1).

12. Dispositif selon l'une des revendications 1 à 11, **caractérisé en ce que** la rampe de guidage (1) a une pente maximale dans la gamme de 1 : 3 à 1 : 1.

13. Dispositif selon l'une des revendications 1 à 12, **caractérisé en ce que** la rampe de guidage (1) a une pente minimale dans la gamme de 1 : 4 à 1 : 15.

14. Dispositif selon l'une des revendications 1 à 13, **caractérisé en ce que** le rapport entre la pente maximale et la pente minimale de la rampe de guidage (1) est au moins de 2 et au plus de 15.

15. Dispositif selon l'une des revendications 1 à 14, **caractérisé en ce que** le corps producteur d'ondes (3) s'étend sur au moins 10 % et au plus sur 70 % de la largeur (BF) des eaux vives.

16. Dispositif selon l'une des revendications 1 à 15, **caractérisé en ce qu'**un flanc amont (7) du corps producteur d'ondes (3) est à plus faible distance d'une délimitation latérale des eaux vives qu'un flanc aval (8).

17. Dispositif selon l'une des revendications 1 à 16, **caractérisé en ce que** la hauteur (hₘ) maximale du corps producteur d'ondes (3) représente au plus 90 % de la hauteur (h_{L}) de la rampe de guidage (1).

18. Dispositif selon l'une des revendications 1 à 17, **caractérisé en ce qu'**une surface d'arrivée du courant (9) sur le corps producteur d'ondes (3) a une pente constante ou croissante en direction du courant (S).

19. Dispositif selon l'une des revendications 2 à 18, **caractérisé en ce que** le corps producteur d'ondes (3) comporte un corps en tuyau (A, H) dont la forme peut être modifiée sous l'action d'une pression intérieure.

20. Dispositif selon la revendication 19, **caractérisé en ce que** le corps producteur d'ondes (3) comporte en amont un composant à membrane (B) mobile grâce au corps en tuyau (A, H).

21. Dispositif selon la revendication 20, **caractérisé en ce que** le composant à membrane (B) a une masse superficielle d'au moins 25 kg/m² et d'au plus 200 kg/m².

22. Dispositif selon la revendication 20 ou 21, **caractérisé en ce que** le composant à membrane (B) est fixé à une base située en amont et tangentielle à la direction du courant.

23. Dispositif selon l'une des revendications 19 à 22, **caractérisé en ce que** le corps producteur d'ondes (3) a un composant déviateur de courant (I) mobile grâce au corps en tuyau (A, H) et en soi pratiquement immobile.

24. Dispositif selon l'une des revendications 1 à 23, **caractérisé en ce que**, à l'état abaissé, le corps producteur d'ondes (3) peut être au moins en partie abaissé dans un renfoncement (E).

25. Dispositif selon l'une des revendications 1 à 24, **caractérisé par** un élément de fermeture (F) qui maintient le corps producteur d'ondes (3) à l'état abaissé.

26. Dispositif selon la revendication 25, **caractérisé en ce que** l'élément de fermeture (F) se trouve à l'intérieur du corps producteur d'ondes (3).

27. Procédé pour produire des ondes dans des eaux vives à l'aide d'un dispositif selon l'une des revendications 1 à 26, dans lequel
- un écoulement spécifique d'au moins 3,0 m³/(s*m) est guidé sur au moins une partie d'un ouvrage transversal (Q),
- quand le courant est torrentiel, il est guidé et dévié de façon à se déployer sur une rampe de guidage (1) incurvée dans l'espace de telle manière qu'à l'extrémité de la rampe de guidage (1) il fasse un angle d'environ 0° à 30° à l'horizontale avec l'axe (L) des eaux vives et qu'il présente des nombres de Froude de l'ordre de 1,5 à 4,0,
- ce jet torrentiel atteint un corps encastré (3) flexible placé à un angle d'environ 35° à 55° à l'horizontale par rapport à l'axe des eaux (L),
- ce jet torrentiel est dévié plus encore vers le haut par le corps encastré (3) flexible,
- la hauteur du corps encastré (3) flexible est réglée de telle manière que l'écoulement, quand il est torrentiel, peut être guidé au-dessus du corps encastré (3), ce qui provoque une onde stationnaire.

28. Procédé selon la revendication 27, **caractérisé en ce que** la hauteur du corps encastré (3) flexible est réglée de telle manière qu'il en résulte une onde déferlante fixe quand l'onde stationnaire se développe le long du corps encastré (3).

29. Procédé selon la revendication 27 ou 28, **caractérisé en ce qu'**on obtient sur le point haut du corps encastré (3) un rapport critique de courant, c'est-à-dire le passage d'un mouvement torrentiel à un mouvement coulant.

30. Procédé selon l'une des revendications 27 à 29, **caractérisé en ce que** l'écoulement est concentré du fait que l'ouvrage transversal (Q) a une forme au moins incomplètement horizontale afin que le courant atteigne le corps encastré (3) de façon ciblée.

31. Procédé selon l'une des revendications 27 à 30, **caractérisé en ce que** l'écoulement et/ou une ligne d'énergie en amont de l'ouvrage transversal (Q) est réglé à l'aide d'une couronne réglable de l'ouvrage transversal (Q).
